# EUROPEAN PATENT APPLICATION

(11) **EP 0 962 842 A2**
(43) Date of publication of application: **08.12.1999**
(21) Application number: 99109273.5
(22) Date of filing: 27.05.1999
(51) Int. Cl.: G05B 19/40

(54) **Step motor with high-precision reset device**

(30) Priority: 03.06.1998 IT MI981230
(71) Applicant: MATEC S.p.A., 50018 Scandicci (Firenze) (IT)
(72) Inventor: Lonati, Francesco, 25128 Brescia (IT); Lonati, Tiberio, 25121 Brescia (IT); Lonati, Ettore, 25121 Brescia (IT); Lonati, Fausto, 25128 Brescia (IT)
(74) Representative: Modiano, Guido, Dr.-Ing.

(57) **Abstract**

A step motor provided with a high-precision reset device, comprising a sensor element (4) which is located in a fixed position with respect to the shaft (2) of the step motor (1), the shaft (2) having an abutment and stop element (3) which protrudes therefrom and is adapted to abut, during the rotation of the shaft (2) with respect to the sensor element (4), against an end (5) of the sensor element (4), for locking the shaft (2) and generating an electrical signal which indicates the position of the shaft (2) with respect to the sensor element (4). The electrical signal defines a zero position of the shaft (2) of the step motor (1).

## Description

The present invention relates to a step motor provided with a high-precision reset device.

It is known that step motors have the ability to rotate by a fixed angle, known as step, at each input pulse. They are characterized by precision and reliability; with respect to DC motors, they have the drawback of being larger for an equal power level and of requiring a more complex control circuit. They can be three kinds: permanent-magnet, variable-reluctance, and hybrid.

In many applications it is necessary to use sensors in order to detect a zero position of the motor, so as to provide a reference for the position of the shaft of said motor.

So-called reset sensors normally used in conventional step motors are generally proximity sensors or optical sensors, which as mentioned are meant to detect the transit, at each turn, of a preset point of the shaft of the step motor, so as to allow to detect its position at all times.

This solution, however, entails drawbacks due to the fact that reset precision depends exclusively on the position of the sensor with respect to the motor shaft and on the precision of its detection.

It is in fact necessary to position the sensor with absolute precision with respect to the shaft of the step motor in order to have an absolutely exact zero reference.

It is also difficult to align the mechanical zero of the step motor with the electric zero and to provide a system which is stable, i.e. a system whose zero point is highly stable overtime.

This arises from the fact that conventional sensors are subject to changes due to temperature variations and to the aging of the sensor.

Accordingly, with conventional sensors the resetting of the step motor cannot be determined with absolute precision and repeatability.

The solution to these drawbacks is found by using complicated reset circuits which are adapted to compensate for the thermal variations that can affect the sensor and highly precise sensors which as such have a high cost.

The aim of the present invention is to provide a step motor which has a reset sensor which is highly precise and is not affected by the drawbacks that occur in conventional sensors currently used in step motors.

Within the scope of this aim, an object of the present invention is to provide a step motor having a reset device which is capable of providing a stable reset.

Another object of the present invention is to provide a step motor provided with a reset device which allows to provide both a mechanical reference and an electrical reference which mutually coincide.

Another object of the present invention is to provide a step motor having a reset device in which said device has a low cost.

Another object of the present invention is to provide a step motor having a reset device which is advantageously usable in hosiery knitting machines and the like.

Another object of the present invention is to provide a step motor having a reset device which is highly reliable, relatively easy to manufacture and at competitive costs.

This aim, these objects and others which will become apparent hereinafter are achieved by a step motor provided with a high-precision reset device, characterized in that it comprises a sensor element which is located in a fixed position with respect to the shaft of said step motor, said shaft having an abutment and stop element which protrudes therefrom and is adapted to abut, during the rotation of said shaft, against an end of said sensor element, for locking said shaft and generating an electrical signal which indicates the position of said shaft with respect to said sensor element, said electrical signal defining a zero position of said shaft.

Further characteristics and advantages of the present invention will become apparent from the following detailed description of a preferred embodiment of the step motor according to the present invention, illustrated by way of non-limitative example in the accompanying drawings, wherein:

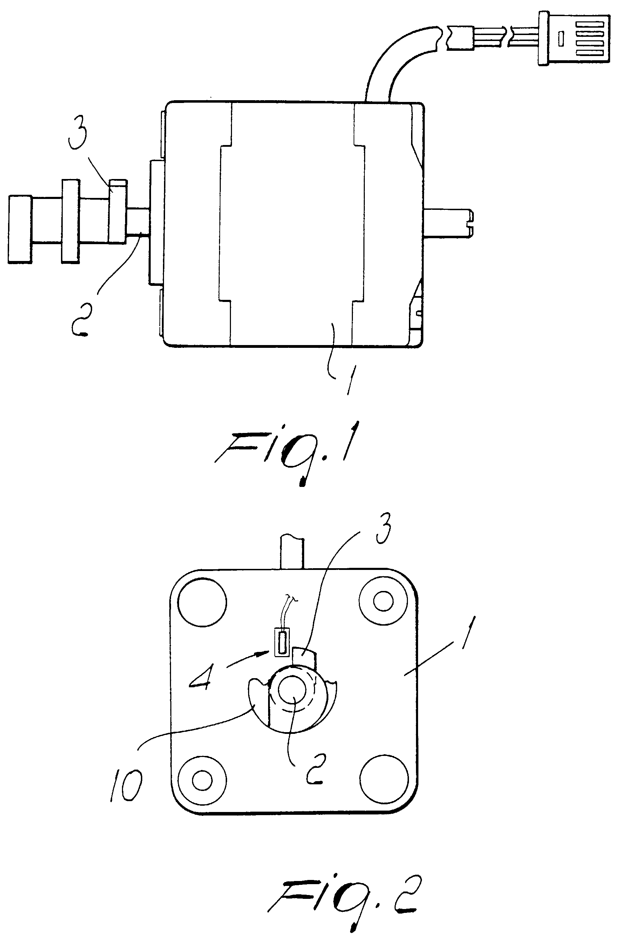

Figure 1 is a side view of a step motor to which a sensor device according to the present invention has been applied;
Figure 2 is a front view of the step motor to which the sensor device according to the present invention is applied;
Figure 3 is a detail view of the sensor used in the step motor of Figures 1 and 2; and
Figure 4 is a detailed partial view of the placement of the sensor with respect to the shaft of the step motor.

With reference to the above figures, the step motor according to the present invention, designated by the reference numeral 1, is provided with a driving shaft 2 at which there is provided an abutment tooth 3, as shown in Figure 4, formed on a cam 10.

Adjacent to the tooth 3 there is provided a sensor element, designated by the reference numeral 4, which is advantageously formed by a piezoelectric sensor (transducer) adapted to convert a mechanical vibration applied thereto into an electrical signal.

The piezoelectric transducer 4 is therefore arranged adjacent to the tooth 3, substantially at right angles to the shaft and fixed with respect to the shaft 2 of the step motor 1, so that the tooth 3, during the rotation of the shaft 2, abuts against the end portion 5 of the piezoelectric sensor 4 and stops against it.

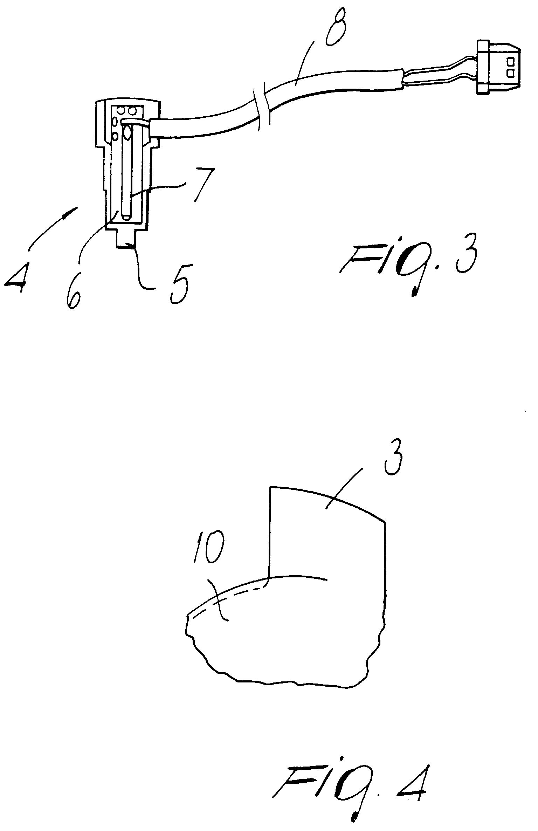

Said sensor has, as shown in Figure 3, a printed circuit 6 on which a lamina 7 made of piezoelectric material is arranged which is adapted to convert the kinetic energy absorbed by the end portion 5 of the sensor 4 as a consequence of the impact of the tooth 3 against the tip 5 of the sensor 4 into an electrical signal which is adapted to determine an electrical zero of the step motor or rather of the shaft 2 of said motor.

The sensor 4 is thus arranged so as to constitute a mechanical stop element for the tooth 3 and therefore the electrical zero substantially coincides with the mechanical zero for the rotation of the shaft 2 of the step motor 1.

The electrical signal generated as a consequence of the impact of the tooth 3 against the end portion 5 of the sensor 4 is sent, by means of a cable 8, to an amplifier circuit, not shown, for acquisition.

In order to avoid the rebound of the tooth 3 against the end portion 5 of the piezoelectric sensor element 4, it is preferable to accurately control the dimensions of the step of the step motor, i.e. the value of the angle that the shaft 2 of the motor covers during each step of the actuation of the motor.

The smaller the value of said angle, the higher the precision of the piezoelectric sensor, since the tooth 3 undergoes substantially no rebound by abutting against the end portion 5 of the piezoelectric sensor 4.

In this manner it is possible to generate a very precise mechanical reference and at the same time an electrical reference which temporally coincides with it and is therefore also highly precise.

In practice it has been observed that the step motor according to the present invention fully achieves the intended aim and objects, since it allows to achieve a highly precise reset of the motor without having to resort to expensive sensors and without requiring an absolutely precise positioning of the piezoelectric sensor with respect to the shaft of the step motor.

Said step motor can be used advantageously for example in hosiery knitting machines and the like.

In a possible application, the step motor according to the invention is connected to an amplifier circuit provided with a filter and an amplifier, which is adapted to detect, amplify and filter the signal generated in the piezoelectric sensor 4 when the end portion 5 of the sensor strikes the abutment tooth 3.

Said signal of the sensor is recognized during the resetting of the step motor and the movement set by a microprocessor to bring the cam 10 and the corresponding tooth 3 into abutment against the end 5 of the sensor 4, which is initially oversized, is hardware-terminated following the generation of the transduction signal, so as to avoid any rebounds which might occur in case of an attempt to generate movement while the cam is in abutment.

The step motor thus conceived is susceptible of numerous modifications and variations, all of which are within the scope of the inventive concept; all the details may also be replaced with other technically equivalent elements.

In practice, the materials employed, so long as they are compatible with the specific use, as well as the dimensions, may be any according to requirements and to the state of the art.

The disclosures in Italian Patent Application No. MI98A001230 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A step motor provided with a high-precision reset device, characterized in that it comprises a sensor element (4) which is located in a fixed position with respect to the shaft (2) of said step motor (1), said shaft (2) having an abutment and stop element (3) which protrudes therefrom and is adapted to abut, during the rotation of said shaft (2) with respect to said sensor element (4), against an end (5) of said sensor element (4), for locking said shaft (2) and generating an electrical signal which indicates the position of said shaft (2) with respect to said sensor element (4), said electrical signal defining a zero position of said shaft (2).

2. The step motor according to claim 1, characterized in that said sensor element (4) is arranged substantially at right angles to the axis of said driving shaft (2).

3. The step motor according to claim 1, characterized in that said sensor element is a piezoelectric sensor (4).

4. The step motor according to claim 3, characterized in that said piezoelectric sensor (4) comprises a lamina (7) made of piezoelectric material which is arranged along the axis of said sensor (4), at right angles to the axis of the shaft (2) of the step motor (1).

5. The step motor according to one or more of the preceding claims, characterized in that said abutment element is constituted by a tooth (3) which protrudes from the shaft (2) of said step motor (1) and is substantially perpendicular to the axis of said shaft (2).

6. The step motor according to one or more of the preceding claims, characterized in that said tooth (3) is formed on a cam (10) which is rigidly coupled to said shaft (2) of the step motor (1).

7. The step motor according to one or more of the preceding claims, characterized in that said piezoelectric sensor (4) comprises a printed circuit (6) which is arranged within the body of said sensor (4) and along its axis, said lamina (7) made of piezoelectric material being arranged on said printed circuit (6).
